# EUROPEAN PATENT APPLICATION

(11) **EP 4 604 590 A1**
(43) Date of publication of application: **20.08.2025**
(21) Application number: 25158002.3
(22) Date of filing: 14.02.2025
(51) Int. Cl.: H04W 8/18

(54) **SUBSCRIBER PROFILE AND CREDENTIAL DISTRIBUTION IN HYBRID CLOUD ACCESS NETWORKS**

(30) Priority: 14.02.2024 US 202463553464 P; 13.02.2025 US 202519053236
(71) Applicant: Cisco Technology, Inc., San Jose, CA 95134-1706 (US)
(72) Inventor: Stammers, Timothy P., San Jose, 95134-1706 (US); Wolfinger, Charles Carlton, San Jose, 95134-1706 (US); Adhvaryu, Bhavik Yogeshkumar, San Jose, 95134-1706 (US); Joseph, Praveen, San Jose, 95134-1706 (US); Nicoara, Eugen O., San Jose, 95134-1706 (US); Kim, Nam, San Jose, 95134-1706 (US)
(74) Representative: Noble, Nicholas

(57) **Abstract**

Disclosed are methods, systems, and computer-readable media that securely pull relevant subscriber profiles and SIM credentials periodically to ensure that the subscriber data is in sync with the data on the central cloud. The edge can request a subscriber profile from the cloud and provide an offset value corresponding to a prior profile for the subscriber. The cloud can then detect a change to the subscriber profile and increment an updated offset value associated with the subscriber profile. The updated offset value can then be used to sort a set of devices based on a time at which they were changed.

## Description

### CROSS-REFERENCE TO RELATED APPLICATIONS

This application claims priority to U.S. Patent Application Serial No. 63/553,464, filed on February 14, 2024, the contents of which are hereby incorporated by reference in their entirety.

### TECHNICAL FIELD

The present disclosure relates to network communication, and in particular to the management of subscriber profiles and/or Subscriber Identity Module (SIM) credentials.

### BACKGROUND

In a hybrid cloud architecture for a private cellular service, subscriber profiles are provisioned in a central cloud with that cloud also hosting authentication and registration services for devices requesting cellular access. The session management and user traffic functions execute at one or more edge clouds or as enterprise on-premise appliances or a combination of the two. For security reasons, there is a benefit to initiating transactions between the edge/enterprise premise and the central cloud from the remote locations.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1A illustrates an example cloud computing architecture in accordance with some aspects of the disclosed technology;
FIG. 1B illustrates an example fog computing architecture in accordance with some aspects of the disclosed technology;
FIG. 2A depicts an example schematic representation of a 5G network environment in which network slicing has been implemented in accordance with some aspects of the disclosed technology;
FIG. 2B illustrates an example 5G network architecture in accordance with some aspects of the disclosed technology;
FIGs. 3A and 3B illustrate a diagram of various components that are involved in end-to-end flow where the edge pulls the subscriber profiles from the cloud in accordance with some aspects of the disclosed technology;
FIG. 4 illustrates a diagram of how a Subscriber Data Management (SDM) Administrator can add or update subscriber's default settings and authentication keys into the cloud computing system database in accordance with some aspects of the disclosed technology;
FIG. 5 illustrates a diagram illustrating how the cloud monitors changes to a subscriber and assigns an offset number to updated subscribers in accordance with some aspects of the disclosed technology;
FIGs. 6A-6H are a diagram illustrating how the edge pulls subscriber profiles from the cloud in accordance with some aspects of the disclosed technology;
FIG. 7 illustrates a routine for synchronizing subscriber profile data between a cloud and edge in accordance with some aspects of the disclosed technology; and
FIG. 8 illustrates an example of a computing system in accordance with some aspects of the disclosed technology.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

A used herein the term "configured" shall be considered to interchangeably be used to refer to configured and configurable, unless the term "configurable" is explicitly used to distinguish from "configured". The proper understanding of the term will be apparent to persons of ordinary skill in the art in the context in which the term is used.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

Components within a central cloud can sometimes be inaccessible to an edge device. This can be problematic because authentication or provisioning are normally performed by requesting such information from the cloud. Some regulations also require certain authentication to be performed within a certain geography such that retrieving authentication data from the cloud is not feasible.

Remote pull approaches are often desired for security reasons. Here, an edge device can request data from the cloud and can even provision (add, modify, delete) subscriber profiles stored within the cloud. But what if the cloud is inaccessible and the edge instead provisions the profiles remotely?

The presently disclosed technology securely pulls the relevant subscriber profiles and SIM credentials periodically to ensure that the subscriber data is in sync with the data on the central cloud. The edge can request a subscriber profile from the cloud and provide an offset value corresponding to a prior profile for the subscriber. The cloud can then detect a change to the subscriber profile and increment an updated offset value associated with the subscriber profile. The updated offset value can then be used to sort a set of devices based on a time at which they were changed.

In particular, the presently disclosed embodiments include a method, network device, and computer readable medium that perform the steps: receiving a request to obtain a subscriber profile for a subscriber within a cloud network, wherein the request includes a prior offset value for the subscriber, and wherein the prior offset value corresponds to a prior version of the subscriber profile; detecting a change to the subscriber profile; incrementing the prior offset value to an updated offset value associated with the subscriber profile, wherein the updated offset value is used to sort a set of devices based on a time at which the set of devices were changed; and providing the subscriber profile and the updated offset value.

In some embodiments, incrementing the prior offset value to the updated offset value comprises receiving a subscriber provisioning request; updating the subscriber profile based on the subscriber provisioning request; and incrementing the prior offset value to the updated offset value to identify that changes have been made to the set of devices.

In some embodiments, detecting the change to the subscriber profile within the cloud network further comprises reading the prior offset value from the request; and determining that the prior offset value does not correspond to the updated offset value.

In some embodiments, determining that the prior offset value does not correspond to the updated offset value further comprises determining an enterprise associated with the subscriber; retrieving a stored offset value corresponding to the subscriber from a database; and comparing the updated offset value to the stored offset value to determine that the updated offset value and the stored offset value do not correspond to one another.

In some embodiments, the request includes a subscriber identifier that identifies the subscriber associated with the subscriber profile, and an enterprise identifier that identifies an enterprise associated with the subscriber.

In some embodiments, providing the subscriber profile and the updated offset value comprises combining a master template with subscriber data to thereby provide a complete subscriber profile in response to the request.

In some embodiments, the request is periodically received on a repeat basis.

### EXAMPLE EMBODIMENTS

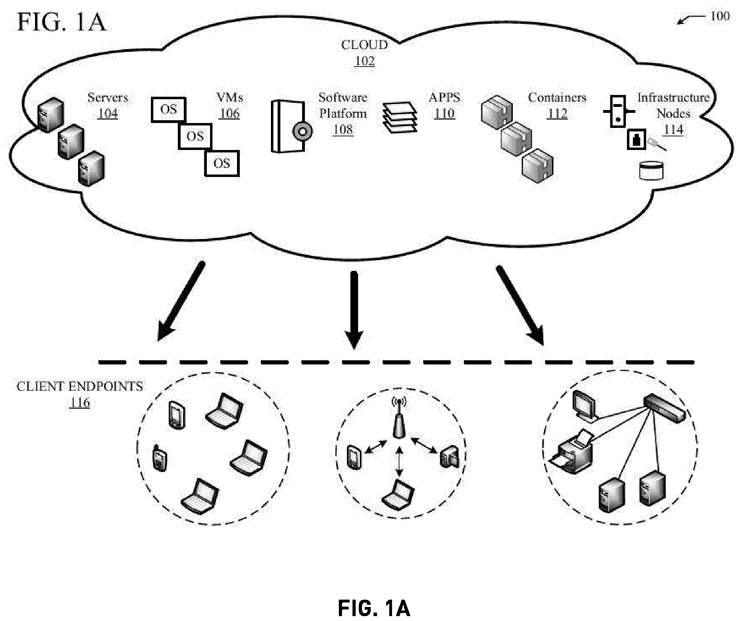

FIG. 1A illustrates a diagram of an example cloud computing architecture 100. The architecture can include a cloud 102. The cloud 102 can be used to form part of a TCP connection or otherwise be accessed through the TCP connection. Specifically, the cloud 102 can include an initiator or a receiver of a TCP connection and be utilized by the initiator or the receiver to transmit and/or receive data through the TCP connection. The cloud 102 can include one or more private clouds, public clouds, and/or hybrid clouds. Moreover, the cloud 102 can include cloud elements such as servers 104, virtual machines (VMs 106), one or more software platforms 108, applications or services 110, software containers 112, and infrastructure nodes 114. The infrastructure nodes 114 can include various types of nodes, such as compute nodes, storage nodes, network nodes, management systems, etc.

The cloud 102 can be used to provide various cloud computing services via the cloud elements, such as SaaSs (e.g., collaboration services, email services, enterprise resource planning services, content services, communication services, etc.), infrastructure as a service (IaaS) (e.g., security services, networking services, systems management services, etc.), platform as a service (PaaS) (e.g., web services, streaming services, application development services, etc.), and other types of services such as desktop as a service (DaaS), information technology management as a service (ITaaS), managed software as a service (MSaaS), mobile backend as a service (MBaaS), etc.

The client endpoints 116 can connect with the cloud 102 to obtain one or more specific services from the cloud 102. The client endpoints 116 can communicate with the cloud elements via one or more public networks (e.g., Internet), private networks, and/or hybrid networks (e.g., virtual private network). The client endpoints 116 can include any device with networking capabilities, such as a laptop computer, a tablet computer, a server, a desktop computer, a smartphone, a network device (e.g., an access point, a router, a switch, etc.), a smart television, a smart car, a sensor, a GPS device, a game system, a smart wearable object (e.g., smartwatch, etc.), a consumer object (e.g., Internet refrigerator, smart lighting system, etc.), a city or transportation system (e.g., traffic control, toll collection system, etc.), an Internet-of-things (IoT) device, a camera, a network printer, a transportation system (e.g., airplane, train, motorcycle, boat, etc.), or any smart or connected object (e.g., smart home, smart building, smart retail, smart glasses, etc.), and so forth.

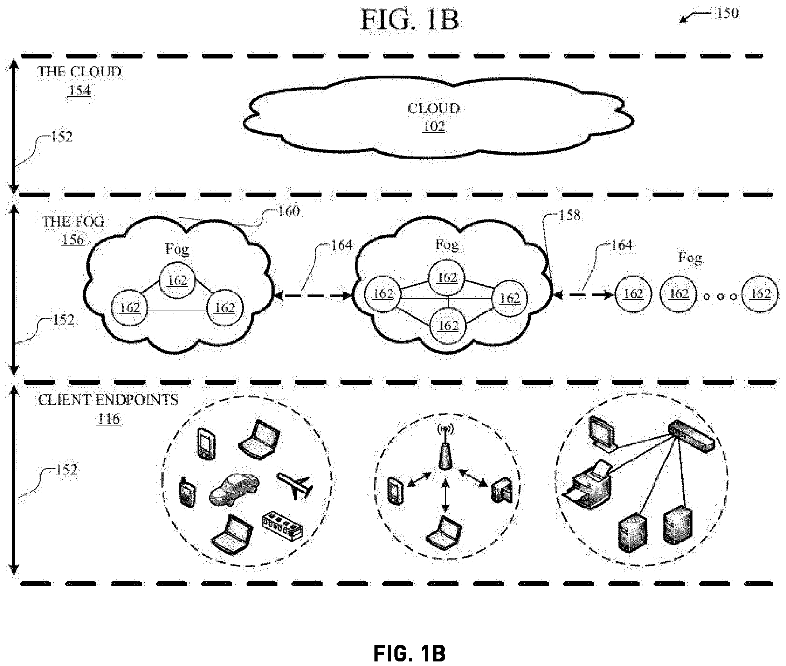

FIG. 1B illustrates a diagram of an example fog computing architecture 150. The fog computing architecture 150 can be incorporated into the cloud computing architecture as described in FIG. 1A. Accordingly, the fog computing architecture 150 can include the cloud layer 154, which includes the cloud 102 and any other cloud system or environment, and the fog layer 156, which includes fog nodes 162. The client endpoints 116 can communicate with the cloud layer 154 and/or the fog layer 156. The fog computing architecture 150 can include one or more communication links 152 between the cloud layer 154, the fog layer 156, and the client endpoints 116. Communications can flow up to the cloud layer 154 and/or down to the client endpoints 116, as a part of a TCP connection, accessed through the TCP connection, can include an initiator or a receiver of a TCP connection and be utilized by the initiator or the receiver to transmit and/or receive data through the TCP connection.

The fog layer 156 or "the fog" provides the computation, storage, and networking capabilities of traditional cloud networks, but closer to the endpoints. The fog can thus extend the cloud 102 to be closer to the client endpoints 116, and provide local or regional services and/or connectivity to the client endpoints 116. As a result, traffic and/or data can be offloaded from the cloud 102 to the fog layer 156 (e.g., via fog nodes 162). The fog layer 156 can thus provide faster services and/or connectivity to the client endpoints 116, with lower latency, as well as other advantages such as security benefits from keeping the data inside the local or regional network(s).

The fog nodes 162 can include any networked computing devices, such as servers, switches, routers, controllers, cameras, access points, gateways, etc, and be deployed within fog instances 158, 160. For example, the fog instances 158, 160 can be a regional cloud or data center, a local area network, a network of fog nodes 162, etc. Moreover, the fog nodes 162 can be deployed anywhere with a network connection, such as a factory floor, a power pole, alongside a railway track, in a vehicle, on an oil rig, in an airport, on an aircraft, in a shopping center, in a hospital, in a park, in a parking garage, in a library, etc. Moreover, one or more of the fog nodes 162 can be interconnected with each other via links 164 in various topologies, including star, ring, mesh, or hierarchical arrangements, for example.

In some cases, fog nodes 162 can be mobile fog nodes. The mobile fog nodes can move to different geographic locations, logical locations, or networks, and/or fog instances while maintaining connectivity with the cloud layer 154 and/or the client endpoints 116. For example, a particular fog node can be placed in a vehicle, such as an aircraft or train, which can travel from one geographic location and/or logical location to a different geographic location and/or logical location.

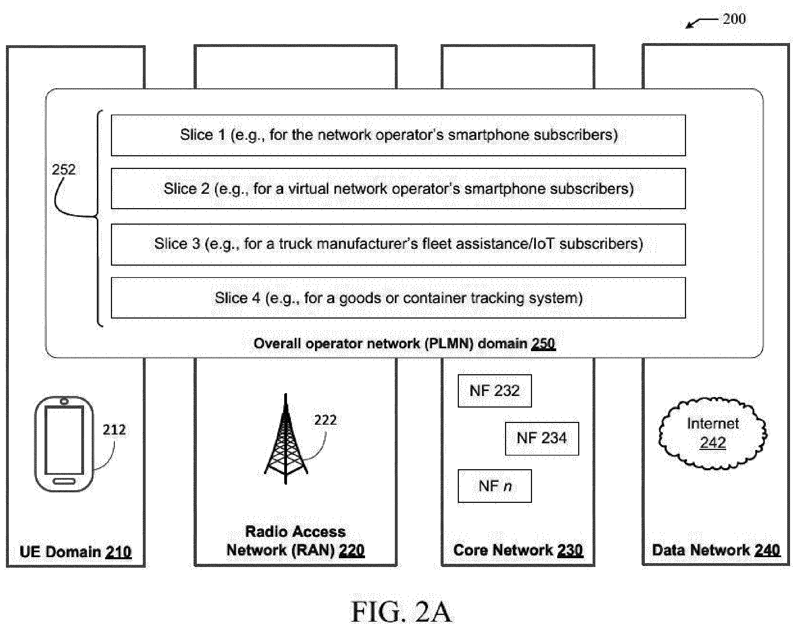

FIG. 2A depicts an exemplary schematic representation of a 5G network environment in which network slicing has been implemented, and in which one or more aspects of the present disclosure may operate, according to some aspects of the present disclosure. In some examples, the 5G network environment 200 can be utilized to implement the cloud 102 of FIG. 1A and/or the fog computing architecture 150 of FIG. 1B.

As illustrated, 5G network environment 200 is divided into four domains, each of which will be explained in greater depth below; a User Equipment domain (UE domain 210), e.g. of one or more enterprises, in which a plurality of user cellphones or other connected devices reside; a Radio Access Network domain (RAN domain 220), in which a plurality of radio cells, base stations, towers, or other radio infrastructure 222 resides; a core network 230, in which a plurality of Network Functions (NFs) 232, 234, ..., n reside; and a data network 240, in which one or more data communication networks such as the Internet 242 reside. Additionally, the data network 240 can support SaaS providers configured to provide SaaSs to enterprises, e.g. to users in the UE domain 210.

In some example embodiments, core network 230 is a 5G core network (5GC) in accordance with one or more accepted 5GC architectures or designs, or an Evolved Packet Core (EPC) network, which combines aspects of the 5GC with existing 4G networks. Core network 230 contains a plurality of NFs, shown here as NF 232, NF 234... NF n, that execute in a control plane of core network 230. The NFs are configured to provide a service-based architecture in which a given NF allows any other authorized NFs to access its services across any of the plurality of network slices 252 or as a unique instance. The plurality of NFs of the core network 230 includes one or more of Access and Mobility Management Functions (AMF) (typically used when core network 230 is a 5GC network); Mobility Management Entities (MME) (typically used when core network 230 is an EPC network); User Plane Functions (UPFs); Policy Control Functions (PCFs); Authentication Server Functions (AUSFs); Unified Data Management functions (UDMs); Application Functions (AFs); Network Exposure Functions (NEFs); NF Repository Functions (NRFs); and Network Slice Selection Functions (NSSFs).

In some example embodiments, an AMF/MME can be common to or otherwise shared by multiple slices of the plurality of network slices 252, and in some example embodiments an AMF/MME can be unique to a single one of the plurality of network slices 252. In some examples, the NFs can include a Session Management Function (SMF) that controls session establishment, modification, release, etc., and in the course of doing so, provides other NFs with access to these constituent SMF services.

Various other NFs can be provided without departing from the scope of the present disclosure, as would be appreciated by one of ordinary skill in the art.

Across the four domains of the 5G network environment 200, an operator network domain 250 is defined. The operator network domain 250 is in some example embodiments a Public Land Mobile Network (PLMN), a private 5G network and/or a 5G enterprise network, and can be thought of as the carrier or business entity that provides cellular service to the end users in UE domain 210. Within the operator network domain 250, a plurality of network slices 252 are created, defined, or otherwise provisioned in order to deliver a desired set of defined features and functionalities, e.g. SaaSs, for a certain use case or corresponding to other requirements or specifications. Note that network slicing for the plurality of network slices 252 is implemented in end-to-end fashion, spanning multiple disparate technical and administrative domains, including management and orchestration planes (not shown). In other words, network slicing is performed from at least the enterprise or subscriber edge at UE domain 210, through the Radio Access Network (RAN) 120, through the 5G access edge and the core network 230, and to the data network 240. Moreover, note that this network slicing may span multiple different 5G providers.

Within the scope of the 5G mobile and wireless network architecture, a network slice comprises a set of defined features and functionalities that together form a complete Public Land Mobile Network (PLMN), a private 5G network and/or a 5G enterprise network for providing services to UEs. This network slicing permits for the controlled composition of the 5G network with the specific network functions and provided services that are required for a specific usage scenario. In other words, network slicing enables a 5G network operator to deploy multiple, independent 5G networks where each is customized by instantiating only those features, capabilities and services required to satisfy a given subset of the UEs or a related business customer needs.

For example, as shown here, the plurality of network slices 252 include Slice 1, which corresponds to smartphone subscribers of the 5G provider who also operates network domain, and Slice 2, which corresponds to smartphone subscribers of a virtual 5G provider leasing capacity from the operator network domain 250. Also shown is Slice 3, which can be provided for a fleet of connected vehicles, and Slice 4, which can be provided for an IoT goods or container tracking system across a factory network or supply chain. Note that the plurality of network slices 252 are provided for purposes of illustration, and in accordance with the present disclosure, and the operator network domain 250 can implement any number of network slices as needed, and can implement these network slices for purposes, use cases, or subsets of users and user equipment in addition to those listed above. Specifically, the operator network domain 250 can implement any number of network slices for provisioning SaaSs from SaaS providers to one or more enterprises, to facilitate efficient management of SaaS provisioning to the enterprises.

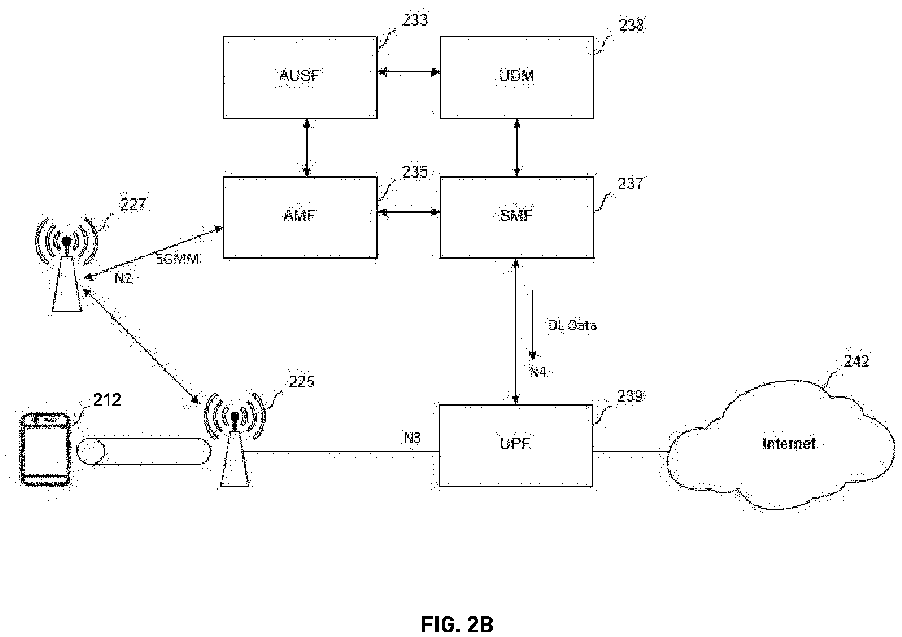

FIG. 2B illustrates an example 5G network architecture. As addressed above, a UE 212 can connect to a radio access network provided by a first gNodeB (first gNB 225) or a second gNB 227.

The first gNB 225 can communicate over a control plane N2 interface with an access mobility function (AMF 235). AMF 235 can handle tasks related to network access through communication with a unified data management function (UDM 238). Collectively, AMF 235 and UDM 238 can determine whether a UE should have access and if any parameters related to the access should be applied. Accordingly, the AMF 235 utilizes the UDM 238 to retrieve any access based information or restrictions of the UE 212. AMF 235 also works with AUSF 233 to handle authentication and re-authentication of the UE 212 as it moves between access networks. The AUSF and the AMF could be separated or co-located.

Assuming AMF 235 determines the UE 212 should have access to a user plane to provide voice or data communications, AMF 235 can select one or more service management functions (SMF 237). SMF 237 can configure and control one or more user plane functions (UPF 239). AUSF 233 can provide a security key to SMF 237 for use in encrypting control plane communications between the SMF 237 and the first gNB 225 or the second gNB 227, via the UPF 239. For example, the SMF 237 can configure UPF 239, acting as a router, with traffic classification rules and traffic policies for the IP address.

As noted above, SMF 237 can configure and control one or more user plane functions (UPF 239). SMF 237 communicates with UPF 239 over an N4 Interface which is a bridge between the control plane and the user plane. SMF 237 can send PDU session management and traffic steering and policy rules to UPF 239 over the N4 interface. UPF 239 can send PDU usage and event reporting to SMF 237 over the N4 interface, and also communicate user plane data or voice over the N3 interface back to UE 212 through the first gNB 225.

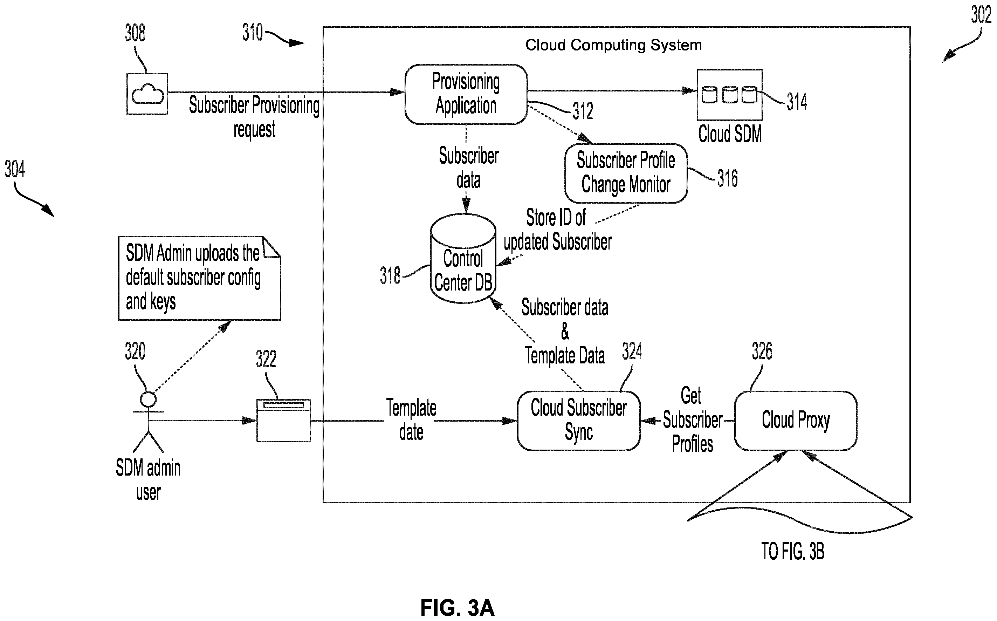

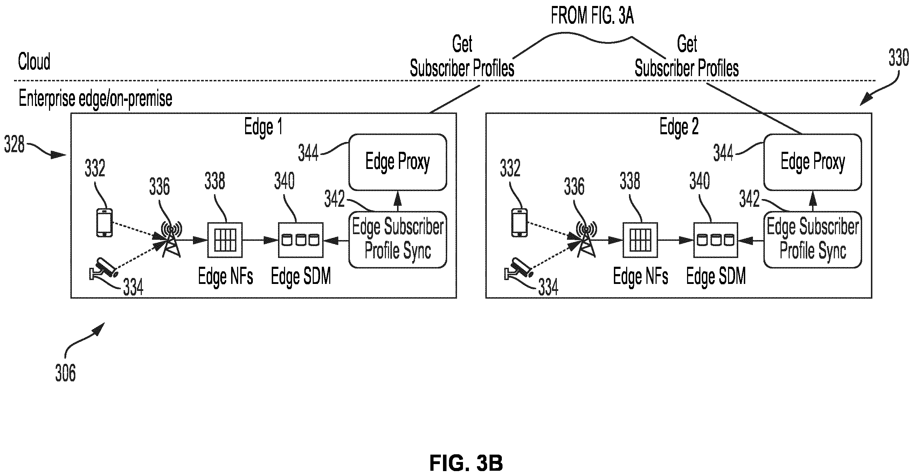

FIGs. 3A and 3B illustrate a diagram of various components that are involved in end-to-end flow where the edge (enterprise premise) pulls the subscriber profiles from the cloud in accordance with some aspects of the disclosed technology. As shown, the diagram 302 illustrates the cloud side 304 and enterprise edge/on premise side 306 of the transaction. A client 308 can send a subscriber provisioning request to a cloud computing system 310 located on the cloud side 304. For example, the client 308 can send the subscriber provisioning request to the provisioning application 312 within the cloud computing system 310. The provisioning application 312 processes the subscriber provisioning requests from client 308 (e.g., service providers, enterprises) and provisions the subscriber data onto the cloud Subscriber Data Management (cloud SDM 314). A subscriber profile change monitor 316 can also be present in the cloud computing system 310 to monitor changes made to subscriber profiles. The provisioning application 312 and subscriber profile change monitor 316 can each communicate with a control center database 318. For example, the provisioning application 312 can send subscriber data to the control center database 318, and the subscriber profile change monitor 316 can store a unique identification number of an uploaded subscriber in the control center database 318.

An SDM admin user 320 can upload a default subscriber configuration and keys 322 to a cloud subscriber sync 324. The default subscriber configuration and keys 322 can include, for example, template data that can be used for all subscribers and their profiles. The cloud subscriber sync 324 can then store the subscriber data and the template data in the control center database 318.

A first edge 328 and a second edge 330 can be located on the enterprise edge/on premise side 306 of the transaction. The first edge 328 and the second edge 330 can each include a user device 332 and a connected device 334 communicably coupled to a radio 336. The radio 336 transmits data through edge network functions (edge NFs 338) which can then store data in the edge SDM 340. The edge subscriber profile sync 342 can send requests to the edge proxy 344, for example to pull subscriber profiles from the cloud computing system 310. The edge subscriber profile sync 342 can also store data in the edge SDM 340, for example, the subscriber profiles.

As shown, the first edge 328 and/or the second edge 330 can pull the subscriber profiles from the loT control center 310. In the existing private cellular service offering, the loT control center 310 acts as the central cloud where subscriber profiles are provisioned, and also hosts authentication and registration services for devices requesting cellular access. In the existing cloud-only solution (where the subscriber profiles are not required to be on the edges) the provisioning application 312 in the cloud computing system 310 processes the subscriber provisioning requests from subscribers and provisions the subscriber data onto the cloud SDM 314.

The subscriber profile change monitor 316 is responsible for tracking changes to a subscriber, which could be the creation, updating, or deletion of subscriber data on the cloud SDM 314. For such changes, the subscriber profile change monitor 316 can store an identifier for the subscriber into the control center database 318. For example, the subscriber's International Mobile Subscriber Identity (IMSI) can be used as the identifier. The subscriber profile change monitor 316 further stores an identifier for the subscriber's enterprise. This is used to retrieve the list of all subscribers for a given enterprise. The subscriber profile change monitor 316 further stores a unique, incrementing, offset number associated with the change. This offset is used to sort the devices based on the time at which they were changed. This offset is used later by the cloud subscriber sync 324 to identify the list of subscriber profiles that are yet to be synchronized with a given edge.

The cloud subscriber sync 324 is responsible for providing an ability to the SDM admin user (who manages the cloud SDM 314) to define the default settings that need to be applied to a set of subscribers. The default settings can also be called master templates. The cloud subscriber sync 324 can also set default settings associated with APN (Access Point Name) and DNN (Data Network Name). The cloud subscriber sync 324 can also store the master template data in the control center database 318.

The cloud subscriber sync 324 further provides an ability to an SDM admin user to configure authentication keys required to decrypt a subscriber's authentication data. The authentication keys are stored securely in the cloud computing system 310. The cloud subscriber sync 324 can further handle REST requests coming from the first edge 328 and/or the second edge 330 to pull the subscriber data that was changed since the last subscriber data was sent to the edge. The request from the first edge 328 and/or the second edge 330 contains the offset number of the subscriber that was last retrieved from the loT control center 310. The cloud subscriber sync 324 queries control center database 318 to identify the subscriber identifiers with offset greater than the offset sent by the edge and then generates the complete subscriber profile by combining the default settings (master template, APN, DNN) and the subscriber specific data already available in the control center database 318. This subscriber profile is then sent in the response to the first edge 328 and/or the second edge 330. The response can also contain the offset of the latest subscriber data present in the response. This offset will used by the first edge 328 and/or the second edge 330 in future requests to identify new changes in subscriber data. For security purposes, the cloud subscriber sync 324 can only retrieve the subscribers that belong to the enterprise owning the edge, i.e., either the first edge 328 or the second edge 330. The cloud proxy 326 can be an existing component in the private cellular service that adds a security layer between cloud and edge.

The first edge 328 and/or the second edge 330 can also include the following novel components. The edge subscriber profile sync 342 can be responsible for periodically sending requests to the cloud side 304 to pull subscriber profiles that are changed since the last pull. The request can include the offset associated with the last subscriber profile retrieved from the cloud by the edge subscriber profile sync 342. For a freshly installed edge or an edge that was reset, the offset can start from zero. The cloud computing system 310 can send a response to this request that contains zero or more subscriber profiles that were updated. The cloud computing system 310 can also send the offset of the last updated subscriber profile in the response. The edge subscriber profile sync 342 can store the subscriber profiles on the edge SDM 340. The edge subscriber profile sync 342 can also store the offset received in the response for the next call to the cloud computing system 310 in a database on the edge, for example, the edge SDM 340. In some embodiments, the edge SDM 340 is a database where the subscriber data of all subscribers associated with the enterprise is stored.

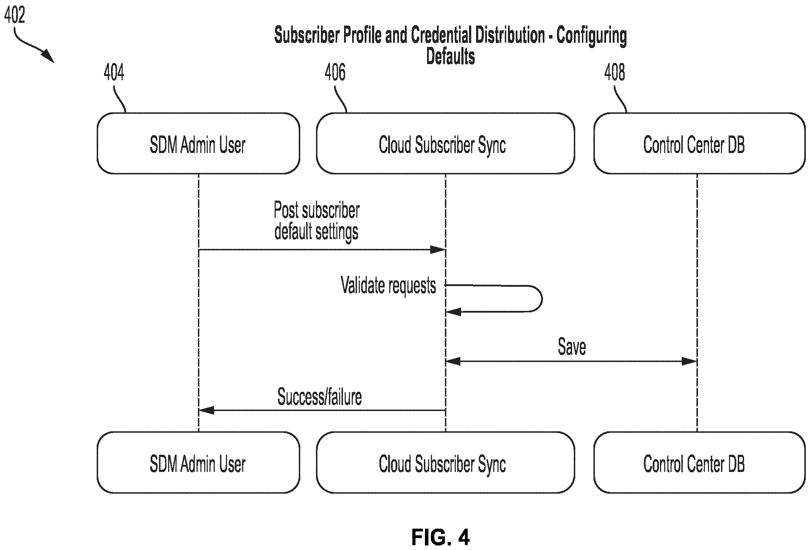

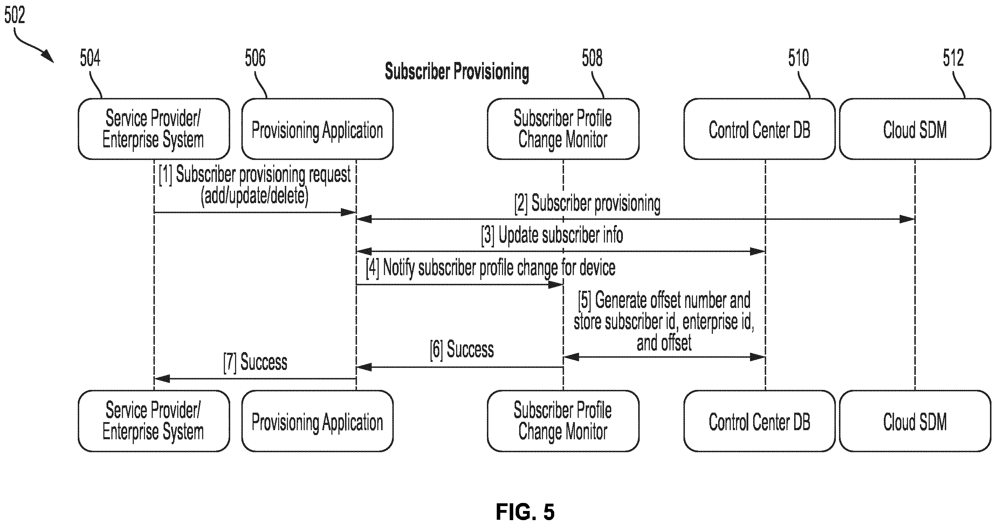

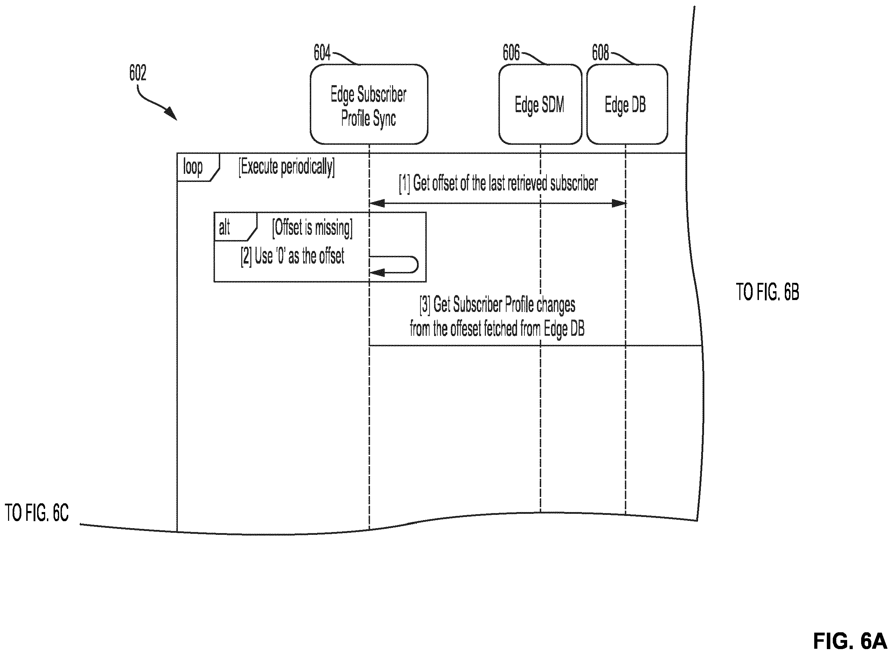

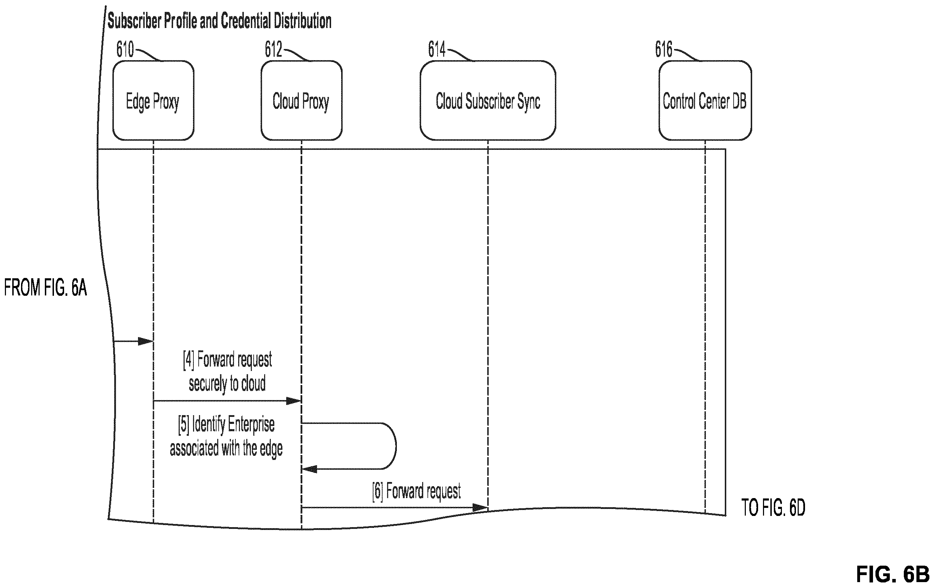

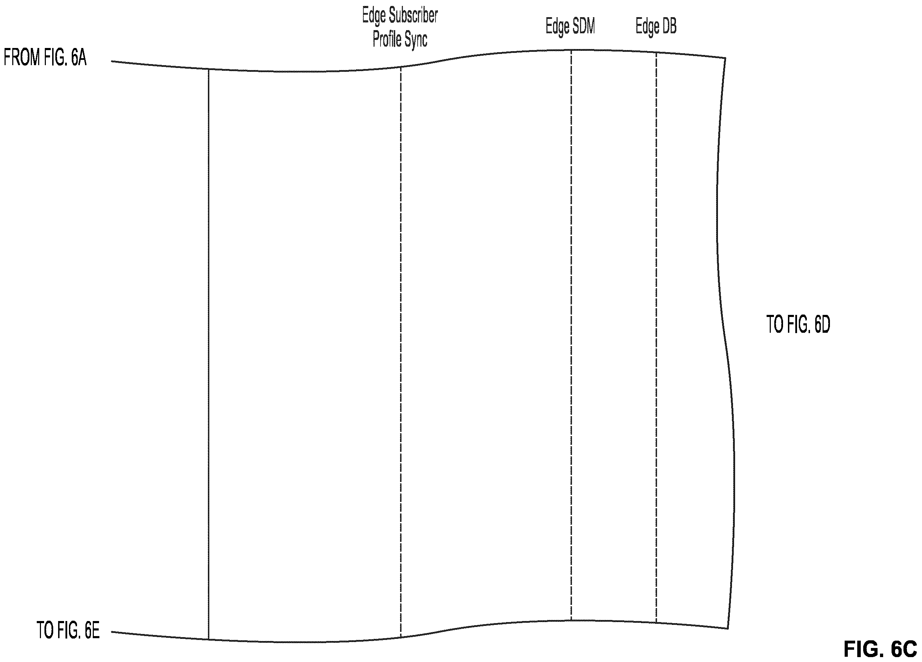

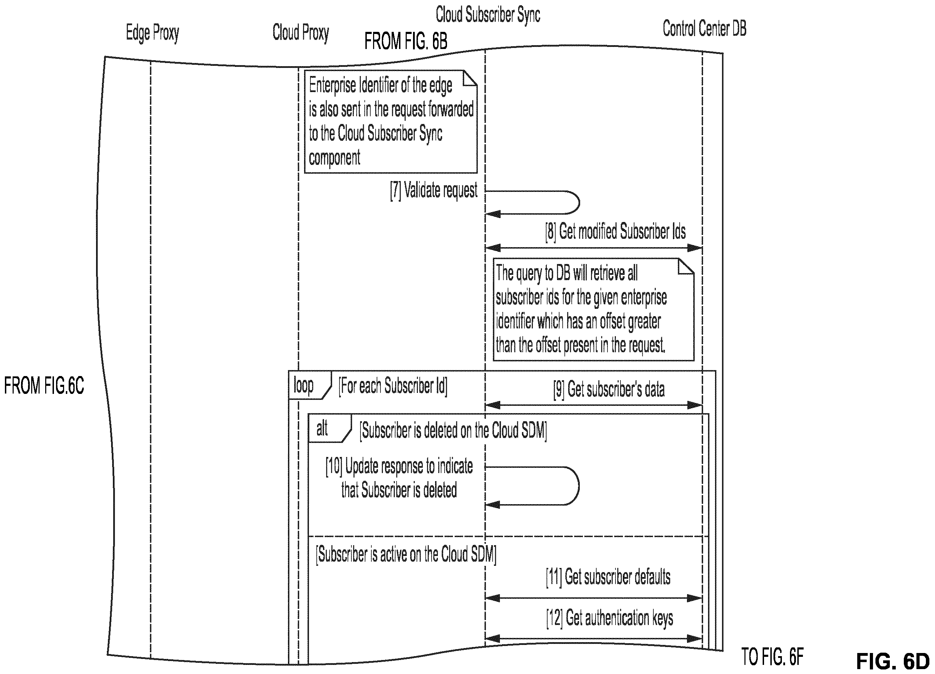

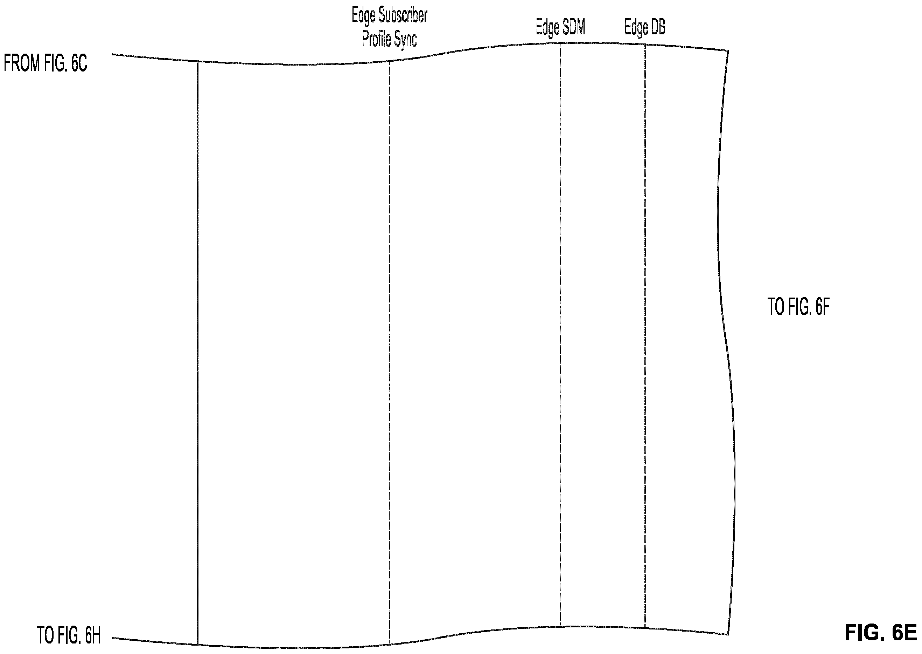

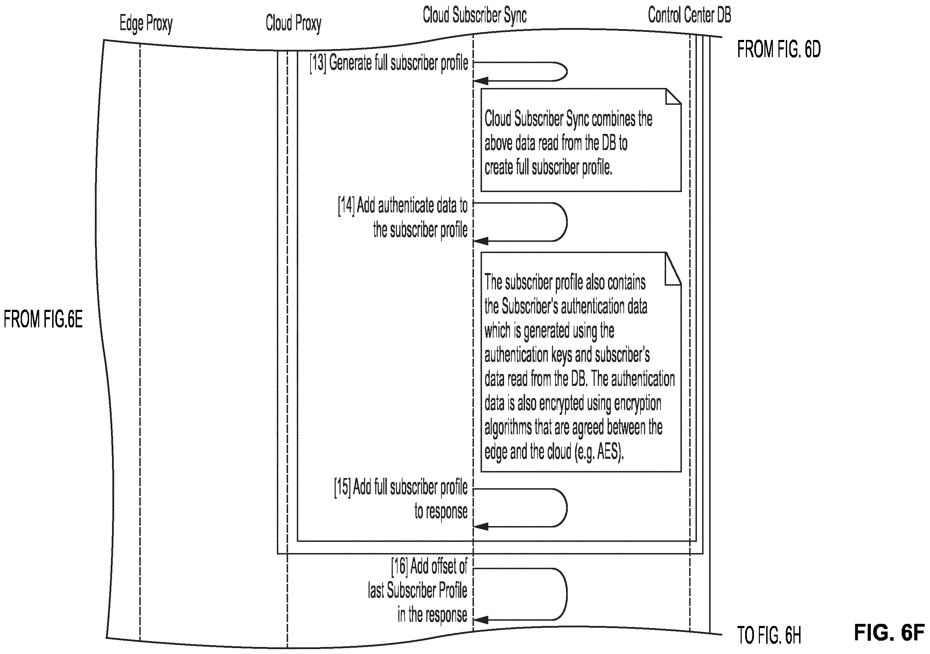

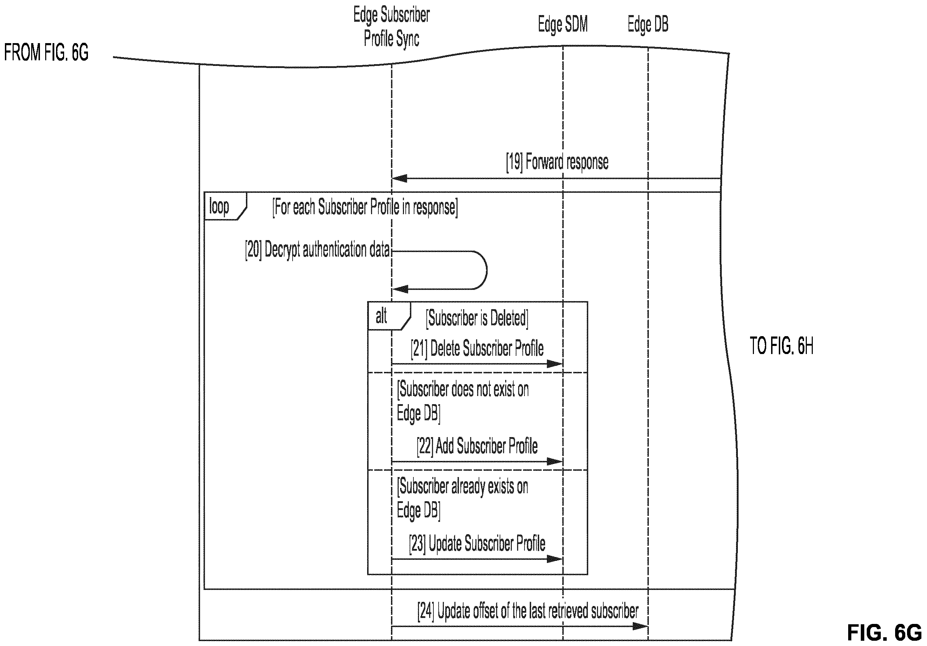

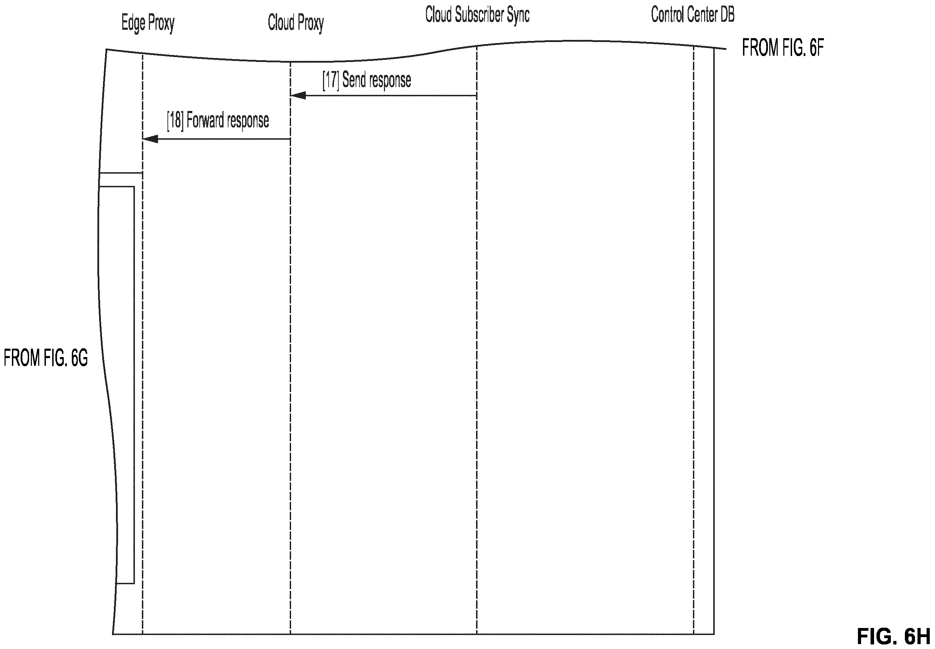

FIGS. 4-6 explain various stages of subscriber provisioning and distribution of the subscriber data to an edge. FIG. 4 shows a diagram 402 of how a Subscriber Data Management (SDM) Administrator can add or update subscriber's default settings and authentication keys into the cloud computing system 310. FIG. 5 shows a diagram 502 illustrating how the cloud computing system 310 keeps track of changes to a subscriber and assigns an offset number to updated subscribers (e.g., a subscriber identification number). FIGs. 6A-H shows a diagram 602 illustrating how the edge pulls subscriber profiles from the cloud. Once the subscriber profiles and credentials are available on the edge, the NFs running on the edge, e.g., AMF, SMF, MME etc., can connect to the edge SDM 340 to authenticate a device and allow network connection. In some embodiments, all the edges pull the enterprise's subscriber data independently and store the profiles on their local edge SDM 340.

FIG. 4 illustrates a diagram 402 of how a Subscriber Data Management (SDM) Administrator can add or update subscriber's default settings and authentication keys into the cloud computing system database in accordance with some aspects of the disclosed technology. As shown, the SDM admin user 404 can transmit subscriber default settings to the cloud subscriber sync 406, which can then validate the requests. Thereafter, the cloud subscriber sync 406 can save the default settings to the control center database 408 and further send a success/failure message to the SDM admin user 404 to advise it of whether the transaction was successful.

FIG. 5 illustrates a diagram 502 illustrating how the cloud monitors changes to a subscriber and assigns an offset number to updated subscribers in accordance with some aspects of the disclosed technology. As shown, a service provider/enterprise system 504 can send a subscriber provisioning request to a provisioning application 506. The provisioning application 506 can then provision the subscribers in conjunction with a cloud SDM 512 while updating subscriber information in conjunction with a control center database 510. The provisioning application 506 can then notify a subscriber profile change monitor 508 of the subscriber profile change for that device. Thereafter or simultaneous with such notification, the subscriber profile change monitor 508 can generate an offset number and store a subscriber identification, enterprise identification, and the offset number in the control center database 510. The subscriber profile change monitor can then notify the provisioning application 506 that the transaction was completed successfully, and the provisioning application 506 can do the same with the service provider/enterprise system 504.

FIGs. 6A-H illustrate a diagram 602 illustrating how the edge pulls subscriber profiles from the cloud in accordance with some aspects of the disclosed technology. In some embodiments, the loop depicted in FIGs. 6A-H can be executed periodically to determine whether a subscriber profile has been updated. As shown, the edge subscriber profile sync 604 can retrieve the offset for the last retrieved subscriber from the edge database. If no such offset is available, the edge subscriber profile sync 604 can establish "0" as the offset number. The edge subscriber profile sync 604 can then request for the edge proxy 610 to retrieve the subscriber profile changes for the offset value obtained from the edge database. The request can include, for example and without limitation, the identifier of the edge, the offset, and the identifier for the subscriber associated with the offset. The edge proxy 610 can then forward that request to the cloud proxy 612 in a secure manner. By analogy, the offset value can be considered similar to a timestamp. The edge will request profiles updated after that timestamp; meaning, the edge will issue a request to the cloud, requesting profiles having an offset value higher than the highest offset value currently available on the edge.

The cloud proxy 612 can then identify the enterprise associated with the edge that sent the request and forward that request to a cloud subscriber sync 614. The cloud subscriber sync 614 can validate the request and then retrieve modified subscriber identification numbers from a control center database 616. In some embodiments, this step will include retrieving all subscriber identification for the enterprise identified in the original request, and where such subscribers have an offset greater than the offset sent in the request. For each such subscriber identification number, the control center database 616 can transmit the subscriber's data to the cloud subscriber sync 614. If the subscriber is deleted from the cloud SDM, the response (from the control center database 616 to the cloud subscriber sync 614) can be updated to indicate that the subscriber is deleted. If the subscriber is active on the cloud SDM, the control center database 616 can send the subscriber defaults and the subscriber authentication keys to the cloud subscriber sync 614.

The cloud subscriber sync 614 can then generate a full subscriber profile by combining the above data read from the control center database 616. The cloud subscriber sync 614 can also add authentication data to the subscriber profile. For example, the subscriber profile can also include the subscriber's authentication data, which is generated using the authentication keys and subscriber data retrieved from the control center database 616. The authentication data can then be encrypted using encryption algorithms that are agreed to between the edge and the cloud (e.g., AES or RC4). The cloud subscriber sync 614 can then add the full subscriber profile to the response, add the offset to the latest subscriber profile in the response, and transmit that data to the cloud proxy 612 to then transmit to the edge proxy 610.

The edge proxy 610 can then transmit the response from the cloud over to the edge subscriber profile sync 604. Thereafter, for each subscriber profile in response, the edge subscriber profile sync 604 can decrypt the authentication data and perform one of several operations depending on whether the subscriber exists on the edge side of the transaction. If the subscriber data is deleted, the edge subscriber profile sync 604 can delete the subscriber profile from the edge SDM 606 and, if the subscriber does not exist on the edge database 608, add the subscriber profile on the edge SDM 606. If the subscriber already exists on the edge database 608, the edge subscriber profile sync 604 can update the subscriber profile on the edge SDM 606. Regardless, the edge subscriber profile sync 604 can update the offset for the subscriber after the data corresponding to the subscriber is updated on the edge side of the transaction.

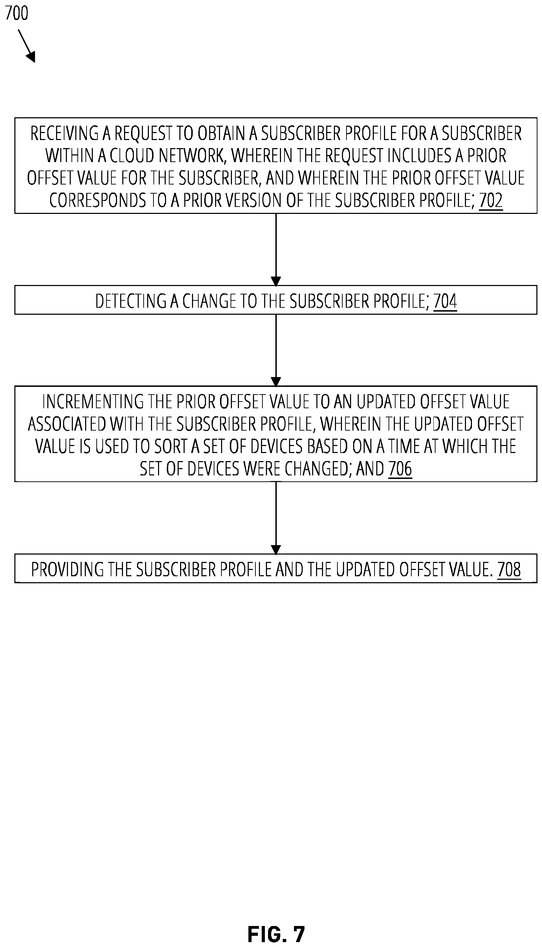

FIG. 7 illustrates an example routine 700 for synchronizing subscriber profile data between a cloud and edge in accordance with some aspects of the disclosed technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the routine 700 includes receiving a request to obtain a subscriber profile for a subscriber within a cloud network at block 702. For example, the cloud computing system 310 can receive a request to obtain a subscriber profile for a subscriber of a cloud network. An edge device associated with, for example, the first edge 328 or the second edge 330 can send the request. By having the edge send the request, it is done in a pull manner rather than a push manner to ensure better security associated with the transmission of the relevant data.

The request can include a prior offset value for the subscriber. The prior offset value can correspond to a prior version of the subscriber profile associated with the subscriber. For example, the prior offset value can be a unique, incrementing, offset number that identifies the change and is used to sort devices based on the time at which they were changed. As will be described below, the offset value is used later by the cloud subscriber sync component(s) to identify the list of subscriber profiles that are yet to be synchronized with a given edge. The offset number can be "0" for a freshly installed edge or an edge that was reset.

The request can also include a subscriber identifier that identifies the subscriber associated with the subscriber profile. For example, the subscriber's International Mobile Subscriber Identity (IMSI) can be used as the identifier. The request can further include an enterprise identifier that identifies an enterprise associated with the subscriber. In doing so, the routine 700 can retrieve a list of all subscribers for a given enterprise for more efficient handling of synchronization requests.

The request can be periodically received by the cloud on a repeat basis. For example, the edge devices can be configured to periodically and repeatedly send requests to the cloud to synchronize subscriber profiles. In doing so, the profiles can be synchronized but the process of synchronization can be done on a pull basis rather than on a push basis, improving security.

According to some examples, the method includes detecting a change to the subscriber profile at block 704. For example, the subscriber profile change monitor 316 can detect a change to the subscriber profile. This can be done in a variety of ways. For example, the routine 700 can make this detection by reading the prior offset value from the request and determining that the prior offset value does not correspond to the updated offset value. In some embodiments, the prior offset value stored at the cloud will be lower than the offset value included within the request and associated with the subscriber profile. This will indicate to the routine 700 that the profile is outdated and needs to be synchronized.

Determining that the prior offset value does not correspond to the updated offset value can be performed in a variety of ways. For example, the routine can make this determination by reading the request to determine the enterprise associated with the subscriber, retrieve the stored offset value corresponding to the subscriber from a database in the cloud, and compare the updated offset value (presented with the request and associated with the updated profile) to the stored offset value to determine that the updated offset value and the stored offset value do not correspond to one another.

According to some examples, the method includes incrementing the prior offset value to an updated offset value associated with the subscriber profile, wherein the updated offset value is used to sort a set of devices based on a time at which the set of devices were changed; and at block 706. For example, the subscriber profile change monitor 316 can increment the prior offset value to an updated offset value associated with the subscriber profile. Incrementing the prior offset value to the updated offset value can include receiving a subscriber provisioning request, updating the subscriber profile based on the subscriber provisioning request, and incrementing the prior offset value to the updated offset value to identify that changes have been made to the set of devices.

According to some examples, the method includes providing the subscriber profile and the updated offset value at block 708. For example, the cloud proxy 326 can provide the subscriber profile and the updated offset value. The response can include the subscriber profiles that were provisioned or, if none were provisioned, an indication that no subscriber profiles are out of sync between the edge and the cloud. In doing so, the cloud proxy 326 can improve security by communicating with the edge proxy 344, for example. Any other manner of transmission of the subscriber profile can be implemented.

Providing the subscriber profile and the updated offset value can be performed in any manner. For example, providing the subscriber profile and the updated offset value can be performed by combining a master template with subscriber data to thereby provide a complete subscriber profile in response to the request. In this manner, the routine 700 can provide the ability to an SDM admin user (who manages the cloud SDM component(s)) to define the default settings (i.e., the master templates) that need to be applied to a set of subscribers. The default settings can be associated with an Access Point Name (APN) and Data Network Name (DNN), for example. The default settings can be stored in a database in the cloud, for example the control center database 318.

The routine 700 can also permit the SDM admin to configure authentication keys required to decrypt the subscriber's authentication data. The authentication keys can be stored, for example, in the control center database 318.

The routine 700 therefore allows a system where multiple remote locations can independently request profile data from a central repository. The cloud subscriber sync 324, for example, can query the control center database 318 to identify the subscriber identifiers with an offset greater than the offset sent by the edge, and then generate the complete subscriber profile by combining the default settings (including the master template, APN, and DNN, for example) and the subscriber specific data already stored in the control center database 318. The entire profile can then be sent in response to the request and synced in the cloud to permit better synchronization and also to allow better functionality when the central database in the cloud is not accessible.

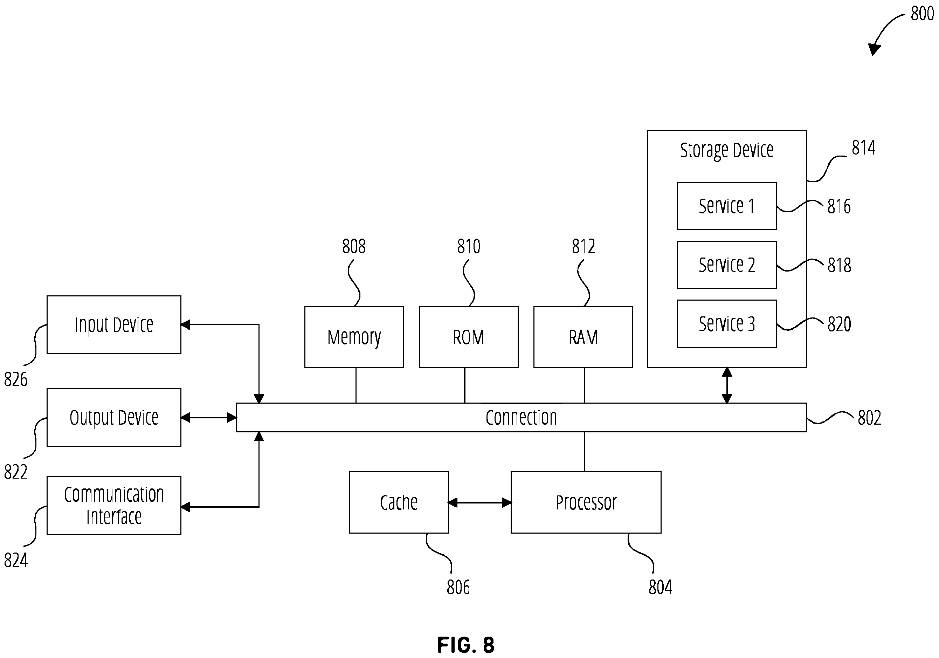

FIG. 8 shows an example of computing system 800, which can be for example any computing device making up user devices, network switches, or any component thereof in which the components of the system are in communication with each other using connection 802. Connection 802 can be a physical connection via a bus, or a direct connection into processor 804, such as in a chipset architecture. Connection 802 can also be a virtual connection, networked connection, or logical connection.

In some embodiments, computing system 800 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example computing system 800 includes at least one processing unit (CPU or processor) 804 and connection 802 that couples various system components including system memory 808, such as read-only memory (ROM) 810 and random access memory (RAM) 812 to processor 804. Computing system 800 can include a cache of high-speed memory 806 connected directly with, in close proximity to, or integrated as part of processor 804.

Processor 804 can include any general purpose processor and a hardware service or software service, such as services 816, 818, and 820 stored in storage device 814, configured to control processor 804 as well as a special-purpose processor where software instructions are incorporated into the actual processor design. Processor 804 may essentially be a completely self-contained computing system, containing multiple cores or processors, a bus, memory controller, cache, etc. A multi-core processor may be symmetric or asymmetric.

To enable user interaction, computing system 800 includes an input device 826, which can represent any number of input mechanisms, such as a microphone for speech, a touch-sensitive screen for gesture or graphical input, keyboard, mouse, motion input, speech, etc. Computing system 800 can also include output device 822, which can be one or more of a number of output mechanisms known to those of skill in the art. In some instances, multimodal systems can enable a user to provide multiple types of input/output to communicate with computing system 800. Computing system 800 can include communication interface 824, which can generally govern and manage the user input and system output. There is no restriction on operating on any particular hardware arrangement, and therefore the basic features here may easily be substituted for improved hardware or firmware arrangements as they are developed.

Storage device 814 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 814 can include software services, servers, services, etc., that when the code that defines such software is executed by the processor 804, it causes the system to perform a function. In some embodiments, a hardware service that performs a particular function can include the software component stored in a computer-readable medium in connection with the necessary hardware components, such as processor 804, connection 802, output device 822, etc., to carry out the function.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Aspect 1. A method comprising receiving a request to obtain a subscriber profile for a subscriber within a cloud network, wherein the request includes a prior offset value for the subscriber, and wherein the prior offset value corresponds to a prior version of the subscriber profile; detecting a change to the subscriber profile; incrementing the prior offset value to an updated offset value associated with the subscriber profile, wherein the updated offset value is used to sort a set of devices based on a time at which the set of devices were changed; and providing the subscriber profile and the updated offset value.

Aspect 2. The method of Aspect 1, wherein incrementing the prior offset value to the updated offset value comprises receiving a subscriber provisioning request; updating the subscriber profile based on the subscriber provisioning request; and incrementing the prior offset value to the updated offset value to identify that changes have been made to the set of devices.

Aspect 3. The method of Aspect 1, wherein detecting the change to the subscriber profile within the cloud network further comprises reading the prior offset value from the request; and determining that the prior offset value does not correspond to the updated offset value.

Aspect 4. The method of Aspect 3, wherein determining that the prior offset value does not correspond to the updated offset value further comprises determining an enterprise associated with the subscriber; retrieving a stored offset value corresponding to the subscriber from a database; and comparing the updated offset value to the stored offset value to determine that the updated offset value and the stored offset value do not correspond to one another.

Aspect 5. The method of Aspect 1, wherein the request includes a subscriber identifier that identifies the subscriber associated with the subscriber profile, and an enterprise identifier that identifies an enterprise associated with the subscriber.

Aspect 6. The method of Aspect 1, wherein providing the subscriber profile and the updated offset value comprises combining a master template with subscriber data to thereby provide a complete subscriber profile in response to the request.

Aspect 7. The method of Aspect 1, wherein the request is periodically received on a repeat basis.

Aspect 8. A network device comprising a storage configured to store instructions; and at least one processor configured to execute the instructions and cause the at least one processor to receive a request to obtain a subscriber profile for a subscriber within a cloud network, wherein the request includes a prior offset value for the subscriber, and wherein the prior offset value corresponds to a prior version of the subscriber profile; detect a change to the subscriber profile; increment the prior offset value to an updated offset value associated with the subscriber profile, wherein the updated offset value is used to sort a set of devices based on a time at which the set of devices were changed; and provide the subscriber profile and the updated offset value.

Aspect 9. The network device of Aspect 8, wherein the instructions to cause the at least one processor to increment the prior offset value to the updated offset value comprises receiving a subscriber provisioning request; updating the subscriber profile based on the subscriber provisioning request; and incrementing the prior offset value to the updated offset value to identify that changes have been made to the set of devices.

Aspect 10. The network device of Aspect 8, wherein the instructions to cause the at least one processor to detect the change to the subscriber profile within the cloud network comprises reading the prior offset value from the request; and determining that the prior offset value does not correspond to the updated offset value.

Aspect 11. The network device of Aspect 10, wherein the instructions to cause the at least one processor to determine that the prior offset value does not correspond to the updated offset value further comprises determining an enterprise associated with the subscriber; retrieving a stored offset value corresponding to the subscriber from a database; and comparing the updated offset value to the stored offset value to determine that the updated offset value and the stored offset value do not correspond to one another.

Aspect 12. The network device of Aspect 8, wherein the request includes a subscriber identifier that identifies the subscriber associated with the subscriber profile, and an enterprise identifier that identifies an enterprise associated with the subscriber.

Aspect 13. The network device of Aspect 8, wherein the instructions to cause the at least one processor to provide the subscriber profile and the updated offset value comprises combining a master template with subscriber data to thereby provide a complete subscriber profile in response to the request.

Aspect 14. The network device of Aspect 8, wherein the request is periodically received on a repeat basis.

Aspect 15. A non-transitory computer-readable storage medium including instructions that, when executed by at least one processor, cause the at least one processor to receive a request to obtain a subscriber profile for a subscriber within a cloud network, wherein the request includes a prior offset value for the subscriber, and wherein the prior offset value corresponds to a prior version of the subscriber profile; detect a change to the subscriber profile; increment the prior offset value to an updated offset value associated with the subscriber profile, wherein the updated offset value is used to sort a set of devices based on a time at which the set of devices were changed; and provide the subscriber profile and the updated offset value.

Aspect 16. The non-transitory computer-readable storage medium of Aspect 15, wherein the instructions that, when executed by the at least one processor, cause the at least one processor to increment the prior offset value to the updated offset value comprises receiving a subscriber provisioning request; updating the subscriber profile based on the subscriber provisioning request; and incrementing the prior offset value to the updated offset value to identify that changes have been made to the set of devices.

Aspect 17. The non-transitory computer-readable storage medium of Aspect 15, wherein the instructions that, when executed by the at least one processor, cause the at least one processor to detect the change to the subscriber profile within the cloud network comprises reading the prior offset value from the request; and determining that the prior offset value does not correspond to the updated offset value.

Aspect 18. The non-transitory computer-readable storage medium of Aspect 17, wherein the instructions that, when executed by the at least one processor, cause the at least one processor to determine that the prior offset value does not correspond to the updated offset value further comprises determining an enterprise associated with the subscriber; retrieving a stored offset value corresponding to the subscriber from a database; and comparing the updated offset value to the stored offset value to determine that the updated offset value and the stored offset value do not correspond to one another.

Aspect 19. The non-transitory computer-readable storage medium of Aspect 15, wherein the request includes a subscriber identifier that identifies the subscriber associated with the subscriber profile, and an enterprise identifier that identifies an enterprise associated with the subscriber.

Aspect 20. The non-transitory computer-readable storage medium of Aspect 15, wherein the instructions that, when executed by the at least one processor, cause the at least one processor to provide the subscriber profile and the updated offset value comprises combining a master template with subscriber data to thereby provide a complete subscriber profile in response to the request.

## Claims

1. A method comprising:
receiving a request to obtain a subscriber profile for a subscriber within a cloud network, wherein the request includes a prior offset value for the subscriber, and wherein the prior offset value corresponds to a prior version of the subscriber profile;
detecting a change to the subscriber profile;
incrementing the prior offset value to an updated offset value associated with the subscriber profile, wherein the updated offset value is used to sort a set of devices based on a time at which the set of devices were changed; and
providing the subscriber profile and the updated offset value.

2. The method of claim 1, wherein incrementing the prior offset value to the updated offset value comprises:
receiving a subscriber provisioning request;
updating the subscriber profile based on the subscriber provisioning request; and
incrementing the prior offset value to the updated offset value to identify that changes have been made to the set of devices.

3. The method of claim 1 or 2, wherein detecting the change to the subscriber profile within the cloud network further comprises:
reading the prior offset value from the request; and
determining that the prior offset value does not correspond to the updated offset value,
optionally wherein determining that the prior offset value does not correspond to the updated offset value further comprises:
determining an enterprise associated with the subscriber;
retrieving a stored offset value corresponding to the subscriber from a database; and
comparing the updated offset value to the stored offset value to determine that the updated offset value and the stored offset value do not correspond to one another.

4. The method of any preceding claim, wherein the request includes a subscriber identifier that identifies the subscriber associated with the subscriber profile, and an enterprise identifier that identifies an enterprise associated with the subscriber.

5. The method of any preceding claim, wherein providing the subscriber profile and the updated offset value comprises combining a master template with subscriber data to thereby provide a complete subscriber profile in response to the request.

6. The method of any preceding claim, wherein the request is periodically received on a repeat basis.

7. A network device comprising:
a storage configured to store instructions; and
at least one processor configured to execute the instructions and cause the at least one processor to:
receive a request to obtain a subscriber profile for a subscriber within a cloud network, wherein the request includes a prior offset value for the subscriber, and wherein the prior offset value corresponds to a prior version of the subscriber profile; detect a change to the subscriber profile;
increment the prior offset value to an updated offset value associated with the subscriber profile, wherein the updated offset value is used to sort a set of devices based on a time at which the set of devices were changed; and
provide the subscriber profile and the updated offset value.

8. The network device of claim 7, wherein the instructions to cause the at least one processor to increment the prior offset value to the updated offset value comprises:
receiving a subscriber provisioning request;
updating the subscriber profile based on the subscriber provisioning request; and
incrementing the prior offset value to the updated offset value to identify that changes have been made to the set of devices.

9. The network device of claim 7 or 8, wherein the instructions to cause the at least one processor to detect the change to the subscriber profile within the cloud network comprises:
reading the prior offset value from the request; and
determining that the prior offset value does not correspond to the updated offset value,
optionally wherein the instructions to cause the at least one processor to determine that the prior offset value does not correspond to the updated offset value further comprises:
determining an enterprise associated with the subscriber;
retrieving a stored offset value corresponding to the subscriber from a database; and
comparing the updated offset value to the stored offset value to determine that the updated offset value and the stored offset value do not correspond to one another.

10. The network device of any of claims 7 t o 9, wherein one or more of:
A) the request includes a subscriber identifier that identifies the subscriber associated with the subscriber profile, and an enterprise identifier that identifies an enterprise associated with the subscriber;
B) the instructions to cause the at least one processor to provide the subscriber profile and the updated offset value comprises combining a master template with subscriber data to thereby provide a complete subscriber profile in response to the request;
C) the request is periodically received on a repeat basis.

11. A non-transitory computer-readable storage medium including instructions that, when executed by at least one processor, cause the at least one processor to:
receive a request to obtain a subscriber profile for a subscriber within a cloud network, wherein the request includes a prior offset value for the subscriber, and wherein the prior offset value corresponds to a prior version of the subscriber profile;
detect a change to the subscriber profile;
increment the prior offset value to an updated offset value associated with the subscriber profile, wherein the updated offset value is used to sort a set of devices based on a time at which the set of devices were changed; and
provide the subscriber profile and the updated offset value.

12. The non-transitory computer-readable storage medium of claim 11, wherein the instructions that, when executed by the at least one processor, cause the at least one processor to increment the prior offset value to the updated offset value comprises:
receiving a subscriber provisioning request;
updating the subscriber profile based on the subscriber provisioning request; and
incrementing the prior offset value to the updated offset value to identify that changes have been made to the set of devices.

13. The non-transitory computer-readable storage medium of claim 11 or 12, wherein the instructions that, when executed by the at least one processor, cause the at least one processor to detect the change to the subscriber profile within the cloud network comprises:
reading the prior offset value from the request; and
determining that the prior offset value does not correspond to the updated offset value,
optionally wherein the instructions that, when executed by the at least one processor, cause the at least one processor to determine that the prior offset value does not correspond to the updated offset value further comprises:
determining an enterprise associated with the subscriber;
retrieving a stored offset value corresponding to the subscriber from a database; and
comparing the updated offset value to the stored offset value to determine that the updated offset value and the stored offset value do not correspond to one another.

14. The non-transitory computer-readable storage medium of any of claims 11 to 13, wherein the request includes a subscriber identifier that identifies the subscriber associated with the subscriber profile, and an enterprise identifier that identifies an enterprise associated with the subscriber.

15. The non-transitory computer-readable storage medium of any of claims 11 to 14, wherein the instructions that, when executed by the at least one processor, cause the at least one processor to provide the subscriber profile and the updated offset value comprises combining a master template with subscriber data to thereby provide a complete subscriber profile in response to the request.
